# EUROPEAN PATENT SPECIFICATION

(11) **EP 3 315 406 B1**
(45) Date of publication and mention of the grant of the patent: **20.05.2020**
(21) Application number: 17197956.0
(22) Date of filing: 24.10.2017
(51) Int. Cl.: B64C 39/02, B64D 1/02, G01N 27/90, G01N 29/04, G01N 21/88

(54) **METHOD AND SYSTEM FOR NON-DESTRUCTIVE TESTING USING AN UNMANNED AERIAL VEHICLE**
VERFAHREN UND SYSTEM ZUR ZERSTÖRUNGSFREIEN PRÜFUNG UNTER VERWENDUNG EINES UNBEMANNTEN LUFTFAHRZEUGES
PROCÉDÉ ET SYSTÈME DE TEST NON DESTRUCTIF AU MOYEN D'UN VÉHICULE AÉRIEN SANS PILOTE

(30) Priority: 31.10.2016 US 201615338491
(43) Date of publication of application: 02.05.2018
(73) Proprietor: The Boeing Company, Chicago, IL 60606-2016 (US)
(72) Inventor: GEORGESON, Gary, Chicago, IL Illinois 60606-2016 (US); LEA, Scott, Chicago, IL Illinois 60606-2016 (US); TROY, James J, Chicago, IL Illinois 60606-2016 (US)
(74) Representative: Boult Wade Tennant LLP

(56) References cited:
- WO-A1-2012/013878
- KR-B1- 101 718 310
- US-A- 6 056 237
- US-A1- 2017 073 071
- US-B1- 9 280 038
- US-B2- 6 588 701

## Description

### Field

The present disclosure is generally related to systems and methods for performing inspection activities, and more particularly to a system and method for enabling remote inspection of structures or objects by an unmanned mobile vehicle.

### Background

Non-destructive inspection ("NDI") of structures involves thoroughly examining a structure without harming the structure or requiring significant disassembly of the structure. NDI is advantageous for many applications in which a thorough inspection of the exterior and/or interior of a structure is required. For example, NDI is commonly utilized in the aircraft industry to inspect aircraft structures for any type of internal or external damage to the structure. Among the structures that are routinely non-destructively inspected are composite structures. As such, it is frequently desirable to inspect composite structures to identify any flaws, such as cracks, voids, or porosity, which could adversely affect the performance of the composite structure. Other examples of structures that pose significant challenges in inspecting are bridges, dams, levees, power plants, power lines or electrical power grids, water treatment facilities; oil refineries, chemical processing plants, high rise buildings, infrastructure associated with electric trains and monorail support structures, just to name a few.

Various types of sensors may be utilized to perform NDI. One or more sensors may move over the structure to be examined, and receive data regarding the structure from which internal flaws can be identified. The data acquired by the sensors is typically processed by a processing element, and the processed data may be presented to a user via a display.

In-person human based inspections of structures and various types of objects can be time consuming, expensive, difficult and often dangerous for an individual to perform. The use of static cameras (i.e., fixed location cameras) to provide periodic pictures of a structure or object requiring periodic visual inspection has met with limited effectiveness. Static cameras have limited visibility of the environment. Therefore, inspecting a large area, such as a power line stretching hundreds of meters or more, is difficult or impossible without using a large number of such cameras. Furthermore, once a camera is mounted in place, it may not be easily accessible for repair or maintenance. The mounting of the camera may require it to be exposed to the elements, which can decrease the reliability and/or cost of operation of the camera.

A static camera mounted near a top of a bridge, to obtain periodic pictures of a structural portion of the bridge, may also be difficult and/or costly to access by an individual if a repair or maintenance becomes necessary. The act of requiring an individual to access a camera mounted high atop a bridge, dam, etc., could also entail significant risk to human safety for the worker or workers charged with such a task.

Occasionally an infrastructure may require inspection where because of environmental, chemical or biological elements the inspection would place a human worker at significant risk to his or her health. Such a situation might be found inside a manufacturing facility, where a periodic regular inspection of a portion of the facility or machines operating within it, in areas where harmful chemicals may be present, needs to be made. Inspection of structural portions of an offshore oil drilling platform would be another example where environmental factors could make the inspection of various parts of the platform by humans fraught with hazard. Still other structures, for example large antennas or telescopes located on mountains, can present situations where inspection by a human presents significant risk to the individual's safety.

In some inspection applications, human piloted helicopters have been used to inspect various infrastructures. However, human piloted helicopters can be expensive to operate in terms of asset cost (helicopter, fuel and maintenance) and operational cost (pilot salary). In addition, inspection is limited by the available number of pilots and helicopters and can be hazardous in some instances, such as during rain or dust storms. Also, the use of human piloted helicopters or other types of vehicles is sometimes simply not possible in some locations that are difficult to access or during inclement weather.

Remote controlled (RC) helicopters are lower in cost but require a skilled operator, and thus inspecting a large area with multiple helicopters requires a large number of expensive skilled operator. In addition, precision visual inspection and the time duration during which an inspection operation may be performed can be limited because of the available number of skilled operators and equipment.

These methods suffer from additional deficiencies. Currently, human piloted RC helicopters can only visually inspect infrastructure. Thus, inspection is limited to detection of surface damage. Furthermore, while GPS equipped human piloted and RC helicopters can provide a rough estimate of location sufficient for visual inspection, GPS tracking is not accurate enough for use in other NDI inspection methods.

Thus, a heretofore unaddressed need exists in the industry to address the aforementioned deficiencies and inadequacies.

US9,280,038 describes a platform for interchangeably mounting a payload to a base support. In one aspect, the platform comprises: a support assembly configured to be releasably coupled to a payload via a first coupling and configured to control a spatial disposition of the payload; and a mounting assembly configured to be releasably coupled via a second coupling to a plurality of types of base supports selected from at least two of the following: an aerial vehicle, a handheld support, or a base adapter mounted onto a movable object.

WO2012/013878 describes a device for non-destructively checking structures, and, for example, measuring the thicknesses of structures using an ultrasonic probe. The device comprises a drone, which is capable of hovering flight and which can preferably be manually and remotely piloted by an operator using a remote control, as well as an onboard measurement probe which is connected to the drone by connection means. The connection means enable the measurement probe, in contact with a surface of a structure to be checked, to be positioned and temporarily immobilized while piloting the drone.

US6,588,701 describes a remotely-controlled unmanned mobile device (UMD) adapted to function as a robot scout to enter and reconnoiter the site of a disaster and to communicate to a rescue mission information regarding conditions prevailing at the site, making it possible for the mission to decide on rescue measures appropriate to these conditions. The UMD is operable in either of two modes. In its air-mobility mode the UMD is able to vertically take off and land, to fly to the site and then hover thereover. In its ground-mobility mode, the UMD can walk on legs over difficult terrain and through wrecked structures and ruins. The UMD is provided with condition-sensitive sensors for gathering data regarding conditions prevailing at the site, and position-sensitive sensors for avoiding obstacles in the path of the walking UMD, thereby assuring safe mobility.; Other sensors govern geo-referenced navigation and flight control functions.

US6,056,237 describes a sonotube-compatible unmanned aerial vehicle apparatus, hereinafter referred to as a UAV, and systems for launch and control of the UAV. The UAV is generally comprised of modular sections including a nose section, a payload section, a wing and fuel tank section, and a powerplant section. The modular sections are attached to adjacent sections by uniform lock sealing rings and related components. The apparatus enabling very small, man portable, ballistically launched, autonomously or semi-autonomously controlled vehicle to be deployed with preprogrammed, communicated, or telemetry mission programming. A wide range of payload packages, including emergency supplies, sensors, and antenna assemblies, may be carried, used or deployed in flight. Man-portable operation is accomplished by the use of a launch canister apparatus. The launch canister comprises retractable launch stabilizing legs, turbine engine exhaust orifices, and various antennas. The launch canister apparatus alternatively comprises a modified type "A", "B", or "C" sonotube launch canister. The system also comprises a portable Command, Control, Communications, Computer, and Intelligence (C4l) control and sensing analysis console. The console is preferably ruggedized, waterproof, shockproof, and comprises necessary control and analysis computers, input/output devices, antennas, and related hardware and software for vehicle and mission control. A C4l console and/or launch canisters may be transported by means of a backpack adapted for man portability.

### Summary

According to examples of the present teachings, a nondestructive inspection ("NDI") system is provided. The NDI system comprising an unmanned aerial vehicle ("UAV") and one or more NDI devices:
the unmanned aerial vehicle ("UAV") comprising a body structure, the body structure comprising one or more support structures where each of the one or more support structures comprise a releasable end structure which are configured to support the one or more NDI devices, with the one or more NDI devices being releasable from the one or more support structures; and
the NDI system further comprising one or more NDI sensors integrated to the one or more NDI devices;
wherein the one or more NDI devices comprise a mounting mechanism that is operable to secure the one or more NDI sensors to a structure to be inspected.

According to examples, the UAV may comprise a release controller operable to provide a control signal to the one or more support structures to release the one or more NDI sensors from the one or more support structures.

According to examples, at least one of the one or more NDI sensors are operable to sense using one or more NDI sensing modalities.

According to examples, the NDI system can further comprise a tether operable to provide power to at least one of the one or more NDI sensors.

According to examples, the NDI system can further comprise a location tracking system operable to determine a position, an orientation, or both the position and the orientation, of at least one of the one or more NDI sensors relative to the structure.

According to examples, the mounting mechanism is magnetic-based, vacuum-based, electrostatic-based, gripper-based, or adhesive-based.

According to examples, the UAV can be operable to move using a predetermined flight path that is updated using position and orientation data obtained from a tracking system or controlled using a remote control system.

According to examples, the one or more NDI sensing modalities can comprise contact-based NDI sensing.

According to examples, the one or more NDI sensors can comprise at least one of: eddy current sensors, ultrasonic sensors, acoustic sensors, mechanical impedance sensors, optical sensors, x-ray backscatter sensors, computed tomography sensors, surface roughness sensors, IR thermography, microwave sensors, and terahertz sensors.

According to examples, at least one of the one or more support structures comprises a manipulator arm. The manipulator arm can comprises a gripper, wherein the gripper is operable to manipulate the one or more NDI devices relative to a structure being inspected.

According to examples, the one or more NDI devices are configured to move relative to the structure during data collection.

According to examples, one of the one or more support structures can comprise one or more maintenance tools, wherein the one or more maintenance tools comprise a sander, a drill, a brush, a paint sprayer, a marker, an ink stamp, a laser, or a target applicator.

According to examples of the present teachings, a nondestructive inspection ("NDI") system is provided. The system comprises a housing configured to house components comprising: one or more NDI sensors operable to measure one or more properties of a structure; a mounting mechanism operable to secure or release the housing to the structure; and a transceiver operable to send measurement data from the one or more NDI sensors, wherein the housing is sized to be delivered to a target location of the structure by an unmanned aerial vehicle ("UAV").

According to examples, the one or more NDI sensors can comprise one or more of: eddy current sensors, ultrasonic sensors, acoustic sensors, mechanical impedance sensors, optical sensors, x-ray backscatter sensors, computed tomography sensors, surface roughness sensors, IR thermography, microwave sensors, and terahertz sensors.

According to examples, the mounting mechanism can be one of magnetic-based, vacuum-based, electrostatic-based, adhesive-based, and gripper-based.

According to examples, the NDI system can further comprise a power supply operable to supply power to the one or more NDI sensors.

According to examples, the NDI system can further comprise a tether operable to provide power to the one or more NDI sensors from a power supply external from the housing, transmit and receive signals data to/from the NDI sensors, and serve as a safety and retrieval mechanism.

According to examples, the NDI system can further comprise an impact protection structure that is operable to provide impact protection for at least a portion of the housing. The impact protection structure can comprise an inflatable structure or a floatation structure.

According to examples, the NDI system can further comprise a locomotion mechanism operable to move the housing along a surface of the structure.

According to examples of the present teachings, a computer program comprising computer instructions is provided that, when executed by a processor of a computerized system, cause the computerized system to perform a method for nondestructive inspection ("NDI") of a structure, the method comprising:
directing an unmanned aerial vehicle ("UAV") to a target location of the structure;
physically securing one or more NDI devices of the to the target location; and
performing NDI of the target location using one or more NDI sensors integrated to the one or more NDI devices;
wherein the method further comprises detaching the one or more NDI devices from one or more support structures of the UAV when physically securing the one or more NDI devices onto the target location of the structure.

According to examples, the physically securing can be magnetic-based, vacuum-based, electrostatic-based, adhesive-based, or gripper-based.

According to examples, the method can further comprise tracking a position, an orientation, or both the position and the orientation relative to the target location using a location positioning system.

It is to be understood that both the foregoing general description and the following detailed description are exemplary and explanatory only and are not restrictive of the disclosure, as claimed.

### Brief Description of the Drawings

The accompanying drawings, which are incorporated in and constitute a part of this specification, illustrate the present disclosure and together with the description, serve to explain the principles of the present disclosure.
FIG. 1 illustrates a first implementation of a system in accordance with examples the present disclosure;
FIG. 2 illustrates a second implementation of a system in accordance with examples the present disclosure;
FIG. 3 illustrates a third implementation of a system in accordance with examples the present disclosure;
FIG. 4, is a block diagram showing a NDI device can be deployed by the UAV, according to examples of the present disclosure
FIG. 5 is a flowchart of operations that may be performed by the systems of FIG. 1 - 3.

### Description

Reference will now be made in detail to exemplary implementations of the present disclosure, examples of which are illustrated in the accompanying drawings. Wherever possible, the same reference numbers will be used throughout the drawings to refer to the same or like parts. In the following description, reference is made to the accompanying drawings that form a part thereof, and in which is shown by way of illustration specific exemplary implementations in which the present disclosure may be practiced. These implementations are described in sufficient detail to enable those skilled in the art to practice the present disclosure and it is to be understood that other implementations may be utilized and that changes may be made without departing from the scope of the present disclosure. The following description is, therefore, merely exemplary.

Generally speaking, examples of the present disclosure describe methods and systems for enabling the use of unmanned aerial vehicles (UAVs), also known as drones, for remote NDI of structures, such as bridges, ships, etc., beyond simply visual inspection with a visual or IR camera. The UAV includes one or more support structures that are attached or integrated at one end to the UAV and supports one or more NDI devices at the other end. The one or more support structure can have a fixed length or can be a telescoping member having a first length when in a retracted state and a longer length at an extended state. The UAV can also enable maintenance activities, such as location tagging for periodic remote inspection. Adhesive tags, paint, etc. can also be left attached for future reference, or enable 3-D visualization. An Off-board tracking system for vehicle and sensor localization provides accurate location of the UAV for navigation and of the inspection location, and correlation with a 3-D model of the structure. Various systems and methods may be used to hold the UAV and/or NDI devices on a surface of a structure to be inspected, including but are not limited to magnetic-based, vacuum-based, electrostatic-based, adhesive-based, or gripper-based. In some examples, more than one of these attachment mechanisms can be used in combination. In the magnetic-based approach, an Electro-Permanent ("EP") magnet can be enabled with an electrical pulse and can stay energized without using power. In the vacuum-based approach, the UAV can include one or more electric ducted fans configured to produce respective suction forces at respective suction zones, as described in background example U.S. Patent No. 8,738,226 titled "Holonomic motion vehicle for travel on non-level surfaces," which is commonly owned with the present application. In the electrostatic-based approach, electrostatic forces are used between a substrate material (e.g., surface of the structure being inspected) and an electroadhesive surface of the support structure or the NDI device. In this approach, electroadhesive pads are comprised of conductive electrodes that are deposited on the surface of a polymer. When alternate positive and negative charges are induced on adjacent electrodes, the electric field sets up opposite charges on the substrate and thus causes electrostatic adhesion between the electrodes and the induced charges on the substrate. In the adhesive-based approach, sticky glue or removable glue pads can be detached from the surface by pulling on a tab. Also, glue can be used that can be switched on and off - meaning that it could be made sticky or non-sticky at will by causing a structure changed in the adhesive to occur. In the gripper-based approach, the one or more support structures can include an end portion having one or more gripping portions that, when actuated, can open or close to physically hold onto a portion of the structure being inspected.

In one example operation, a UAV equipped with one or more NDI devices supported by one or more support structures, such as a manipulator arm, is flown to a target region of the structured being inspected. The UAV operator instructs the UAV to position a NDI device, such as by extending a manipulator arm, onto the target region. The NDI device can have a securing mechanism, such as magnetic-based devices, e.g., an EP magnet, for ferromagnetic structures, and/or vacuum-based, electrostatic-based, adhesive-based, gripper-based for non-ferromagnetic structure. The EP magnet can be enabled with an electrical pulse and then stay energized without using power. When the EP magnet is energized, the UAV can be physically secured onto the target region when it comes into contact with it and supports the weight of the UAV. After being physically secured to the target region, the rotors on the UAV can then be turned off (stop rotating) where the UAV is now is in a stable stationary position. The NDI device can then be activated to take inspection readings. The 3D location of the UAV can be measured by an off-board tracking system, such as a local positioning system ("LPS"), which can determine the location of the UAV in terms of a coordinate system of the structure being inspected. Once the NDI inspection is complete, the rotors of the UAV can be started, the securing mechanism deactivated, and the UAV flies away, or to the next inspection location, and the process is repeated. A camera or camera-equipped device (like a smart phone) can be attached to the UAV to assist in guidance or operation of aspects of the system.

In another example operation, a self-contained NDI device can be dropped-off by the UAV. In this example, a UAV equipped with one or more self-contained NDI devices is flown to a first target region of the structure to be inspected, and the operator instructs the UAV to attach one of the NDI devices to the first target region, and then flies away (or to a second target region, and the drop-off process is repeated). The self-contained NDI device contains the securing mechanism, i.e., magnetic-based, vacuum-based, electrostatic-based, adhesive-based, or gripper-based, which allows the NDI device to be attached to the target region. In the magnetic (EP magnet) example, the NDI device is able to be attached with a single electrical pulse and then stay energized without using power. The NDI device can be wireless and contains one or more NDI sensors, and may contain other controllable elements. After being placed on the target region by the UAV, the 3D location of the NDI device can be measured by an off-board tracking system, i.e., LPS, which can determine the location of the NDI device in terms of the coordinate system of the structure being inspected. Once the NDI inspection is complete, the securing mechanism can be deactivated, such as de-energizing the EP magnet, and the NDI device falls off the target region, and can be retrieved by the operator. In this example, more than one self-contained NDI device can be placed by the UAV in a single flight. In some situations, the NDI device can be placed directly on the structure being inspected by the UAV, in other situations, the UAV may launch the self-contained NDI device like a projectile to enable it to attach them in hard to reach locations on the structure. The self-contained NDI device may contain other features that may be useful in performing the task or preventing damage to the device when it is released from the target object. For example, the NDI device may contain small wheels or tracks to allow it to move over the surface (turning it into a mini-crawler). The NDI device may also contain an inflatable component that can be inflated by wireless command, which can protect the NDI device from damage during a fall (or other people who might be located under it) or to allow it to float if it lands in the water.

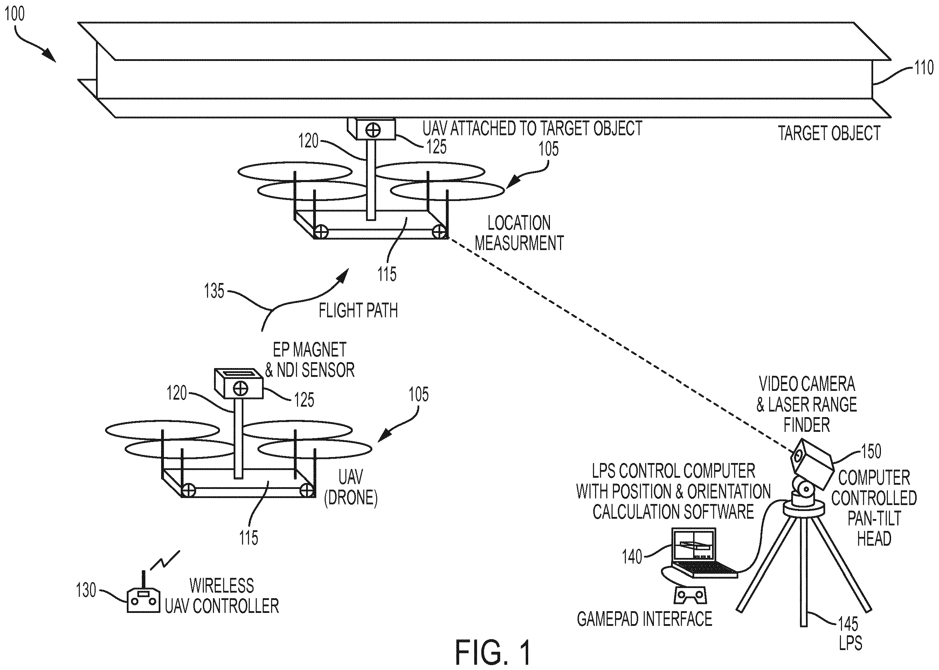

Referring to FIG. 1, there is shown a system 100 for inspecting structures, according to examples of the present disclosure. The system 100 includes an unmanned mobile vehicle 105 that may be used move around a structure 110 requiring periodic inspection. In this example, the unmanned mobile vehicle is illustrated as unmanned aerial vehicle, and more specifically as unmanned rotorcraft (hereinafter after simply referred to as "UAV" 105), although it will be appreciated that other forms of unmanned vehicles such as a unmanned land vehicle and a unmanned marine vessel' (both surface and underwater) could readily be adapted for use with the present system 100. Also, while the target structure 110 is illustrated as a I-beam, the system 100 is equally well adapted for use in inspecting a wide range of other structures including, but not limited to, power lines, power generating facilities, power grids, dams, levees, stadiums, large buildings, large antennas and telescopes, tanks, containers, water treatment facilities, oil refineries, chemical processing plants, high rise buildings, and infrastructure associated with electric trains and monorail support structures. The system 100 is also particularly well suited for use inside large buildings such as manufacturing facilities and warehouses. Virtually any structure that would be difficult, costly, or too hazardous to inspect by a human piloted vehicle or RC vehicle may potentially be inspected using the system 100.

UAV 105 includes a body structure 115 on which one or more support structures 120 are arranged. The one or more support structures 120 are attached to the body structure 115 at one end and integrated with one or more NDI devices 125 at a second end. In some examples, at least one of the one or more support structures 120 comprises a manipulator arm, wherein the manipulator arm comprises a gripper, wherein the gripper is operable to manipulate the one or more NDI devices 125 relative to the structure 110 being inspected. In some examples, at least one of the one or more support structures 120 and/or the manipulator arm can be configured with one or more maintenance tools, wherein the one or more maintenance tools comprise a sander, a drill, a brush, a paint sprayer, a marker, a laser, a laser marking system, an ink stamp, or a target applicator.

The one or more NDI devices 125 can include one or more sensors including, but are not limited to, eddy current sensors, ultrasonic sensors, acoustic sensors, mechanical impedance sensors, optical sensors, x-ray backscatter sensors, computed tomography sensors, surface roughness sensors, IR thermography, microwave sensors, and terahertz sensors.

The one or more NDI devices 125 can include a securing mechanism to physically hold the one or more NDI devices 125 and/or the UAV 105 on a surface of the structure 110 to be inspected, including but are not limited to magnetic-based, vacuum-based, electrostatic-based, adhesive-based, or gripper-based. In the magnetic-based approach, an EP magnet can be enabled with an electrical pulse and stay energized without using power. In the vacuum-based approach, which can be combined with adhesive-based approach while the adhesive dries), the UAV can include a on-board vacuum generation system that may include one or more motor-driven impellor units, as described in U.S. Patent No. 8,738,226. The speed at which the motors rotate determines the amount of vacuum generated, and is controlled by a motor controller unit, which is instructed by the operator or automated control system from the control workstation station. The vacuum attachment system can also include ducting and automatic leveling skirts (or pucks) that allow the system to glide over small objects without losing too much suction. In the electrostatic-based approach, electrostatic forces are used between a substrate material (e.g., surface of the structure being inspected) and an electroadhesive surface one the support structure or NDI sensor. In this approach, electroadhesive pads are comprised of conductive electrodes that are deposited on the surface of a polymer. When alternate positive and negative charges are induced on adjacent electrodes, the electric field sets up opposite charges on the substrate and thus causes electrostatic adhesion between the electrodes and the induced charges on the substrate. In the adhesive-based approach, sticky glue or removable glue pads can be detached from the surface by pulling on a tab. Also, glue can be used that can be switched on and off - meaning that it could be made sticky or non-sticky at will by causing a structure changed in the adhesive to occur. In the gripper-based approach, the one or more support structures can include an end portion having one or more gripping portions that, when actuated, can open or close to physically hold onto a portion of the structure being inspected.

With regard to the magnetic-based approach, the one or NDI devices 125 can include a securing mechanism that actively controls the attraction force between coupling magnets, such as described in background example U.S. Patent No. 9,156,321 titled "Adaptive Magnetic Coupling System," which is commonly owned by the same assignee as the present application. In this example, the one or more NDI devices 125 can be operable to automatically adapt to a variable thickness of the structure 110 by actively adjusting the magnitude of the attraction force between magnets that used to couple one or more NDI devices 125 to the structure 110.

In some examples, the one or more NDI devices 125, once deployed by the UAV 105, may be operable to move along or around a surface of the structure 110 using one or more locomotion mechanisms, such as using tracks, wheels, articulating arms, etc. which may engage with the surface to facilitate movement. The locomotion can be accomplished using at least the securing mechanism, such as by selectively turning on and off the securing mechanism in a controlled manner. For example, using the magnetic-based approach, the one or more NDI devices 125 can move over a variable-thickness skin of the structure 110 where sensor data is used by a control system to determine the appropriate attraction force between the one or more NDI devices 125 and the structure 110, enabling the magnetic coupling system to automatically adapt to the variable skin thickness. In some examples, the teachings of background example U.S. Patent No. 8,738,226 titled "Holonomic Motion Vehicle for Travel on Non-Level Surfaces," which is commonly owned with the present application can be used to facility movement of the one or more NDI devices 125. In this example, the one or more NDI devices 125 can have a frame having four (or a multiple of four) Mecanum wheels, where each wheel driven by a respective independently controlled motor, and further having a plurality (e.g., two) of independently controlled suction devices. The Mecanum wheels enable holonomic motion, while the suction devices facilitate sufficiently precise control of motion on non-level surfaces.

In some examples, the UAV 105 can include an onboard system that is able to navigate the UAV 105 in accordance with a preprogrammed flight plan and to enable inspection data for the structure 110 being inspected to be obtained. In some examples, the UAV 105 can be flown along a flight path 135 by an operator using a wireless UAV controller 130. The UAV 105 can be controlled using the teachings of background example U.S. Patent No. 7,643,893 titled "Closed-Loop Feedback Control Using Motion Capture System," which is commonly owned with the present application. The UAV 105 can be controlled using a closed-loop feedback control system using a motion capture systems. The system can includes a motion capture system configured to measure one or more motion characteristics of the UAV 105 as the UAV 105 operates within a control volume. A processor receives the measured motion characteristics from the motion capture system and determines a control signal based on the measured motion characteristics. A position control system receives the control signal and continuously adjusts at least one motion characteristic of the UAV 105 in order to maintain or achieve a desired motion state. The UAV 105 may be equipped with passive retro-reflective markers. The motion capture system, the processor, and the position control system comprise a complete closed-loop feedback control system.

The inspection data may comprise data from the one or more sensors. The inspection data may also include pictures, video or audio data. The preprogrammed flight plan carried by UAV 105 enables the UAV 105 to follow a flight path around a portion of the structure 110. In some examples, more than one UAV 105 can be used and can form what can be viewed as a "swarm" of vehicles that can enable an inspection of various areas of the structure 110 in less time than a single UAV and that may otherwise be difficult, costly and/or hazardous for a human piloted vehicle to inspect.

The system 100 further may include a remote inspection station 140 for receiving wireless communications from the UAV 105. The remote inspection station 140 may include an antenna and a computer control system for viewing by an inspection technician or operator. The remote inspection station 140 may be used to send commands or to monitor various operating performance parameters of the UAV 105, such as fuel remaining, battery power remaining, etc. The remote inspection station 140 may also be used generate commands to alter the flight path 135 of the UAV 105.

The remote inspection station 140 may include a LPS 145. In some examples, the LPS 145 can use the teachings of background example U.S. Patent No. 8,044,991 titled "Local Positioning System and Method" and/or background example U.S. Patent No. 7,859,655 titled "Method Involving a Pointing Instrument and a Target Object," both of which are owned by the same assignee of the present application.

In one example as described in U.S. Patent No. 7,859,655, the LPS 145 can include a video camera, a laser range meter, motorized and measured pan and tilt axes, and a computer, i.e., the remote inspection station 140, communicating with the LPS 145. The LPS 145 can use a method for determining a position of a point of interest on a surface of a target object, such as the structure 110, having a target object coordinate system using a pointing instrument, such as a laser range meter 150, having an aim point axis and having an instrument coordinate system and uses the distance measured by the laser range meter 150 for each of the targeted points in addition to pan and tilt angles.. The method can include measuring an orientation of the aim point axis in the instrument coordinate system when the aim point axis of the instrument is in turn aligned with each of three calibration points on the surface of the target object, wherein positions of the three calibration points in the target object coordinate system are known. The method also includes measuring a distance substantially along the aim point axis from the instrument to each of the three calibration points. The method also includes calculating a calibration matrix (sometimes referred to a camera pose matrix) which transforms a position defined in the instrument coordinate system to a position defined in the target object coordinate system using at least the measured orientation and distance in the instrument coordinate system corresponding to the three calibration points and the known positions of the three calibration points in the target object coordinate system. The method also includes measuring an orientation of the aim point axis in the instrument coordinate system when the aim point axis of the instrument is aligned with the point of interest. The method also includes calculating a position of the point of interest in the target object coordinate system using at least the measured orientation of the aim point axis in the instrument coordinate system corresponding to the point of interest, the calibration matrix, and at least one of a distance substantially along the aim point axis from the instrument to the point of interest and a model of the surface of the target object in the target object coordinate system. The method also includes storing the calculated position.

In another example as described in U.S. Patent No. 7,859,655, the LPS 145 can use a method for determining an orientation of an aim point axis of a pointing instrument, such as the laser range meter 150, having an instrument coordinate system for the aim point axis of the instrument to be aligned with a point of interest on a surface of a target object, such as the structure 110, having a target object coordinate system, wherein a position of the point of interest in the target object coordinate system is known. The method includes calculating an inverse calibration matrix which transforms a position defined in the target object coordinate system to a position defined in the instrument coordinate system. The method also includes calculating the orientation of the aim point axis of the instrument in the instrument coordinate system using at least the inverse calibration matrix, the position of the point of interest in the target object coordinate system, and inverse kinematics of the instrument. The method also includes orienting the aim point axis of the instrument to the calculated orientation.

In still another example as described in U.S. Patent No. 7,859,655, the LPS 145 can use a method for controlling orientation of a laser beam of a laser, such as the laser range meter 150, having an instrument coordinate system for the laser beam to trace an image on a surface of a target object, such as the structure 110, having a target object coordinate system, wherein positions of points for the image on the surface of the target object in the target object coordinate system are known. The method includes calculating an inverse calibration matrix which transforms a position defined in the target object coordinate system to a position defined in the instrument coordinate system. The method also includes calculating orientations of the laser beam of the laser in the instrument coordinate system using at least the inverse calibration matrix, the positions of the points for the image on the surface of the target object in the target object coordinate system, and inverse kinematics of the instrument. The method also includes orienting the laser beam to the calculated orientations to trace a path on the surface of the target object.

In yet example as described in U.S. Patent No. 8,044,991, the LPS 145 can include a video camera, a laser pointer, motorized and measured pan and tilt axes, and a computer, i.e., the remote inspection station 140, communicating with the LPS sighted by the video camera and having a target object coordinate system. The computer is adapted to define a relative position and orientation of the video camera with respect to the target object, determine a position and orientation of the video camera in the target object coordinate system, and determine the position of a point of interest in the target object coordinate system. The system can also be used to aim the camera at a previously recorded point of interest on the target object. The local positioning system may include a video camera, which may have automated (remotely controlled) zoom capabilities and may additionally include an integral crosshair generator to facilitate precise locating of a point within an optical image field display of the video camera. A direction vector that describes the orientation of the camera relative to a fixed coordinate system of the video camera is determined from azimuth and elevation angles, as well as the position of the center of crosshair marker in the optical field when the camera is aimed at a point of interest. This direction vector can be thought of as a line extending from the lens of the camera and intersecting a location on target object. Three-dimensional localization software may be loaded onto the computer. The 3-D localization software may use multiple calibration points at a distance on a target object to define the location (position and orientation) of the video camera relative to the target object. In some applications, the 3D localization software may utilize a plurality of calibration points on the target object, in combination with pan and tilt data associated with the video camera, to define the relative position and orientation of the video camera with respect to the target object. The calibration points may be visible features of known position in the local coordinate system of the target object as determined from a 3-D CAD model or other measurement technique. The calibration points may be used in coordination with the azimuth and elevation angles from the pan-tilt mechanism to solve for the camera position and orientation relative to the target object. Once the position and orientation of the video camera with respect to the target object is determined, the computer may be operated to rotate and zoom the optical image field of the video camera to a desired location of unknown position on the target object. At this position of the direction vector, the orientation of the video camera (which may include the angle of the video camera along the azimuth axis and the elevation axis) may be recorded. By using the azimuth and elevation angles from the pan-tilt unit and the relative position and orientation of the camera determined in the calibration process, the location of the point of interest can be determined relative to the coordinate system of the target object. The reverse process, in which the position of a point of interest may be known in the target object's coordinate system (from a previous data acquisition session, a CAD model, or other measurement), can also be performed. In this situation, the LPS 145 may be placed in any location the work area where calibration points are visible (which may be in a different location than the location where the original data was recorded) and the camera pose calibration step may be performed. The direction vector from the point of interest to the camera may be calculated in the target object's coordinate system. The inverse of the camera pose transformation matrix may be used to convert the direction vector into the coordinate system of the camera. The azimuth and elevation angles may then be calculated and used by the pan-tilt unit to aim the camera at the point of interest on the target object. In some applications, at least one (such as three, for example) laser pointer may be mounted on the camera and aligned with the direction vector. The at least one laser pointer may provide a visual indication on the target object as to the aim or direction of the video system. This sighting feature provided by the laser pointer may be helpful in aiding rapid selection of positional calibration points and points of interest on the target object and/or on the body structure 115 of the UAV 105, since the intersection of the laser beams (not shown) emitted from the laser pointer with the target object are visible to the naked eye. Use of the laser pointers can also be useful when recalling points in the target object's coordinate system (which could be previous repair locations or other points of interest) by showing the location on the target object.

In some examples, the UAV 105 can be controlled by direct manual control using the wireless UAV controller 130 and/or using a computer control element that can be integrated with the wireless UAV controller 130, and/or the LPS 145, and/or remote inspection station 140.

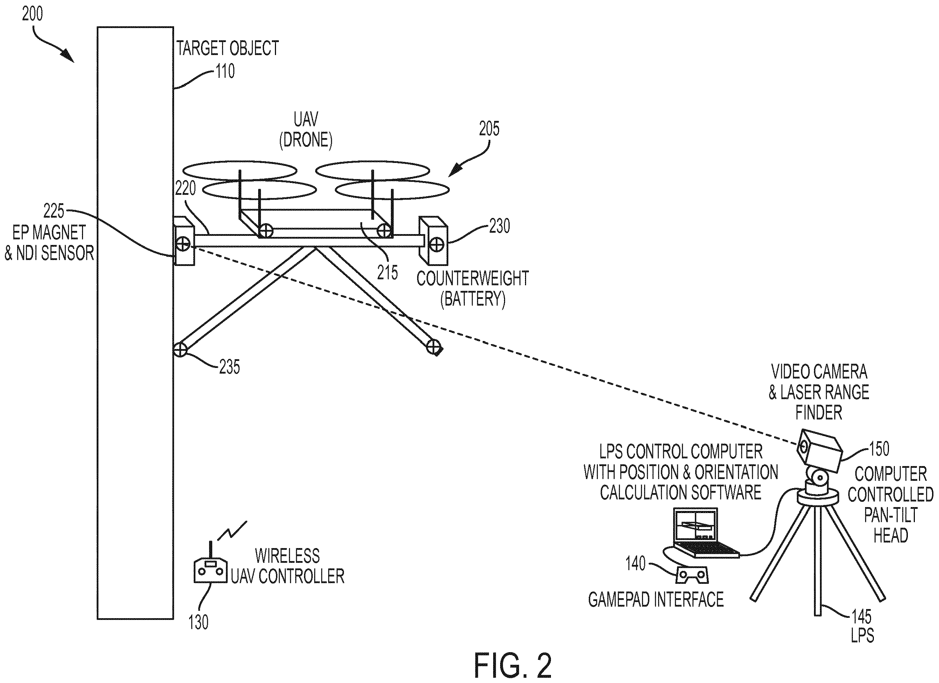

Referring to FIG. 2, there is shown a system 200 for inspecting structures, according to examples of the present disclosure. The system 200 is similar to system 100 of FIG. 1 with the differences being the arrangement of the one or more support structures 220, the attachment device, the NDI device 225 location, and the addition of a counterweight 230. In this example, at least one of the one or more support structures 220 is arranged in a longitudinal axis of a body structure 215 of a UAV 205. One or more NDI devices 225 can be integrated at one end of the support structure 220 and the counterweight 230, which can be or include a battery, can be arranged at the other end.

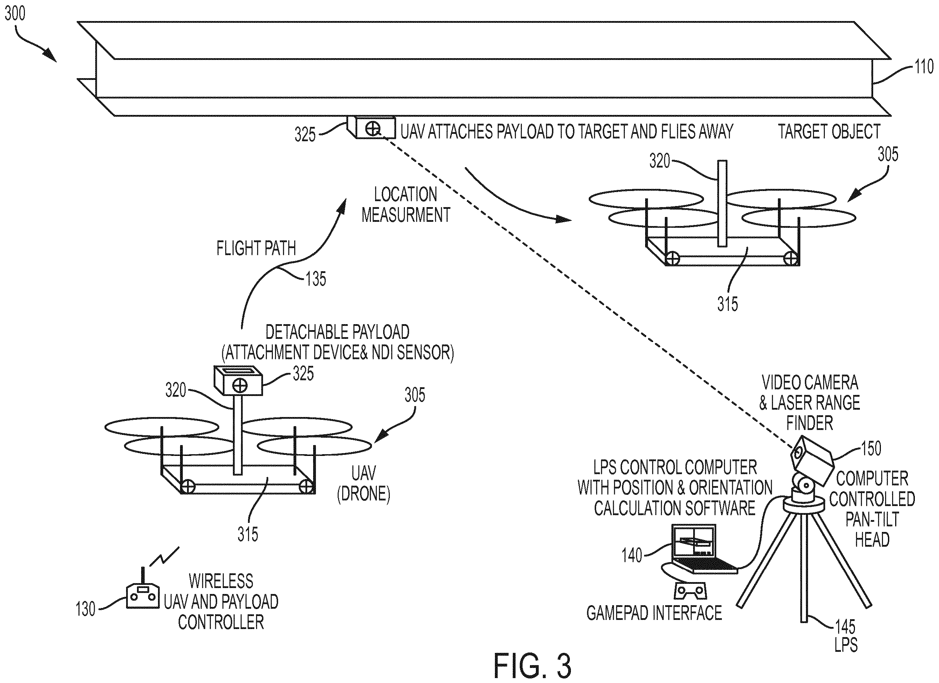

Referring to FIG. 3, there is shown a system 300 for inspecting structures, according to examples of the present disclosure. The system 300 includes a UAV 305 arranged with one or more support structures 320 operable to support one or more NDI devices 325, which can be integrated at one end of the support structure 320. The system 300 is similar to system 100 of FIG. 1 with the difference being the one or more NDI devices 325 can be detached from the one or more support structures 320 and physically secured onto a target location of the structure 110 using one or more of the securing mechanisms described herein. Once the one or more NDI devices 325 are secured on the target location, the UAV 305 can then be directed to another target location of the structure 110 where another NDI device 325 can be deployed onto the structure 110 or can be directed to return to the operator. In some examples, once the NDI devices 325 have completed their data collection, the UAV 305 can be directed to retrieve the one or more NDI devices 325 or the one or more NDI devices 325 can be detached, either via the operator control or otherwise programmed to disengage with the structure 110, and fall from the structure 110.

In the examples of FIGS. 1 -3, the UAV 105 and/or NDI devices 125, 225, 325 when docked with or physically secured to the structure 110, provide the NDI devices 125, 225, 325 positional stability with respect to the structure, which allows the NDI devices to acquire higher spatial resolution of damage and time-dependent sensing (like IR thermography) to be performed. The positional stability can be achieved with contact of the UAV 105, 205, 305, and/or using a member 235 as shown in FIG. 2 that makes contact with the structure 110.

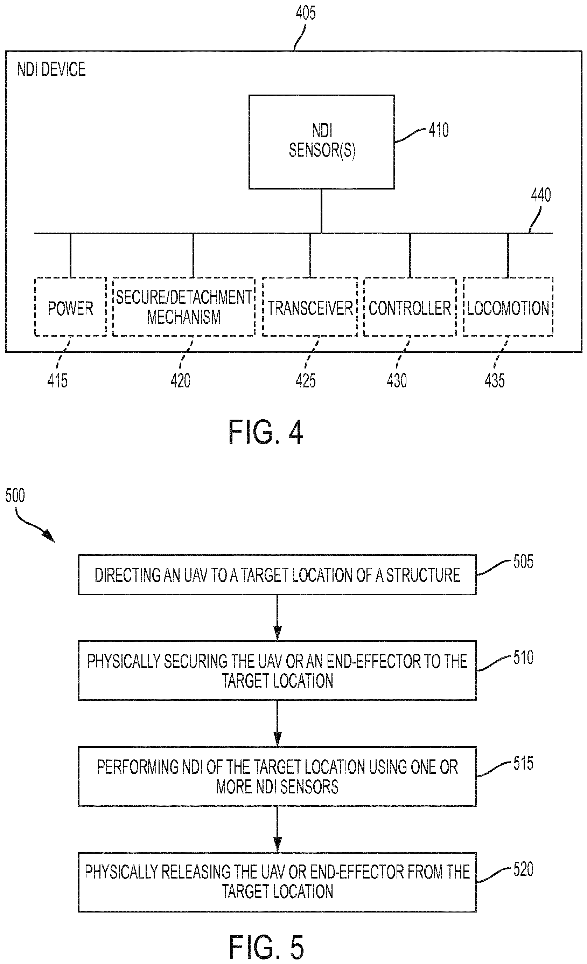

Referring to FIG. 4, there is shown a NDI device 405 can be deployed by the UAV 105, according to examples of the present disclosure. The NDI device 405, which can be NDI devices 125, 225, 325, includes one or more NDI sensors 410 that can be operable to detect one or more contact-based, non-contact based, or both sensing modalities. The NDI device 405 can be sized to be carried by UAV 105, 205, 305. For example, the one or more NDI sensors 410 can include, but are not limited to, eddy current sensors, ultrasonic sensors, acoustic sensors, mechanical impedance sensors, optical sensors, x-ray backscatter sensors, computed tomography sensors, surface roughness sensors, IR thermography, microwave sensors, and terahertz sensors. The NDI device 405 can also optionally include a power source 415, a secure/detachment mechanism 420, a transceiver 425, a controller 430, and a locomotion mechanism 435 all connected via a communication bus 440. For example, the power source 415 can provide power to one or more of the subsystems of the NDI device 405. In some examples, additional power or total power may be provided by a tether connected to the UAV 105, 205, 305. The optional tether can also be used to transmit and receive command or data signals to and from the one or more NDI sensors 410, as well as provide a safety and retrieval mechanism for the system. The secure/detachment mechanism 420 can include the one or more securing mechanism disclosed herein and can also include a detachment mechanism that allows the NDI device 405 to be detached from the structure 110 and protected from impact via a flotation mechanism. The transceiver 425 can be configured to provide location and/or measurement data from the one or more NDI sensors 410 to the wireless UAV controller 130 and/or the remote inspection station 140. The controller 430 can be programed with instructions control one or more of the subsystems of the NDI device 405 and/or communicate via the transceiver 425 with the wireless UAV controller 130 and/or the remote inspection station 140. The locomotion mechanism 435 can be operable to move the NDI device 405 along or around the surface of the structure 110 disclosed herein.

Referring to FIG. 5, a method 500 is illustrated that sets forth the operations of one exemplary implementation of the system 100, 200, 300. The method 500 can be embodied in a non-transitory computer-readable storage medium storing operations that when executed by a processor cause the processor to perform the method 500 for NDI of a structure. At operation 505, the UAV 105, 205, 305 with one or more NDI devices 405 is directed to a target location of the structure 110. For example, the UAV 105, 205, 305 can include an onboard system that is able to navigate the UAV 105, 205, 305 in accordance with a preprogrammed flight plan and to enable inspection data for the structure 110 being inspected to be obtained and/or can be flown along a flight path 135 by an operator using a wireless UAV controller 130. At 510, the UAV 105, 205, 305 is physically secured and/or an end-effector, such as at least one support structure 120, 220, 235, 320 or a manipulator arm, to the target location of the structure. In some examples, the UAV 105, 205, 305 remains physically secured to the structure 110 during the NDI testing. In this example, a control signal can be provided by the wireless UAV controller 130 or provided by the controller 430 to stop the rotors of the UAV before performing the NDI testing. In another example, the UAV 105, 205, 305 can physically attached one or more of the NDI devices 405 to the structure 110 and fly away after deployment. At 515, the NDI device 405 performed one or more NDI testing of the target location using one or more NDI sensors 410. At 520, the UAV 105, 205, 305 or the end-effector is physically released from the target location.

For simplicity and illustrative purposes, the principles of the present teachings are described by referring mainly to example implementations thereof. However, one of ordinary skill in the art would readily recognize that the same principles are equally applicable to, and can be implemented in, all types of information and systems, and that any such variations do not depart from the true scope of the present teachings. Moreover, in the foregoing detailed description, references are made to the accompanying figures, which illustrate specific example implementations. Electrical, mechanical, logical and structural changes may be made to the example implementations without departing from the scope of the present teachings. The foregoing detailed description is, therefore, not to be taken in a limiting sense and the scope of the present teachings is defined by the appended claims.

The terms and descriptions used herein are set forth by way of illustration only and are not meant as limitations. For example, although methods has been described in top to bottom fashion, the steps of the method may be performed in a different order than illustrated or simultaneously. Furthermore, to the extent that the terms "including", "includes", "having", "has", "with", or variants thereof are used in either the detailed description or the claims, such terms are intended to be inclusive in a manner similar to the term "comprising." As used herein, the term "one or more of" with respect to a listing of items such as, for example, A and B, means A alone, B alone, or A and B. Those skilled in the art will recognize that these and other variations are possible.

Other implementations consistent with the present teachings will be apparent to those skilled in the art from consideration of the specification and practice of the disclosure disclosed herein. It is intended that the specification and examples be considered as exemplary only, with a true scope of the disclosure being indicated by the following claims.

## Claims

1. A nondestructive inspection ("NDI") system, the NDI system comprising an unmanned aerial vehicle ("UAV") (105; 205; 305) and one or more NDI devices (125; 225; 325; 405):
the UAV (105; 205; 305) comprising a body structure (115; 215; 315), the body structure comprising one or more support structures (120; 220; 320) which are configured to support the one or more NDI devices (125; 225; 325; 405), with the one or more NDI devices (125; 225; 325; 405) being releasable from the one or more support structures (120; 220; 320);
the NDI system further comprising one or more NDI sensors (410) integrated to the one or more NDI devices (125; 225; 325; 405);
wherein the one or more NDI devices (125; 225; 325; 405) comprise a mounting mechanism that is operable to secure the one or more NDI sensors (410) to a structure (110) to be inspected.

2. The NDI system of claim 1, wherein the UAV comprises a release controller operable to provide a control signal to the one or more support structures (120; 220; 320) to release the one or more NDI sensors (410) from the one or more support structures (120; 220; 320).

3. The NDI system of claim 1 or 2, wherein at least one of the one or more NDI sensors (410) are operable to sense using one or more NDI sensing modalities, wherein the one or more NDI sensing modalities comprise contact-based NDI sensing.

4. The NDI system of any preceding claim, comprising a tether operable to provide one or more of: power to at least one of the one or more NDI sensors (410), control signals to at least one of the one or more NDI sensors, and a safety and retrieval mechanism.

5. The NDI system of any preceding claim, wherein the one or more NDI devices (125; 225; 325; 405) are configured to move relative to the structure (110) to be inspected during data collection and, optionally, further comprising a location tracking system operable to determine a position, an orientation, or both the position and the orientation, of at least one of the one or more NDI sensors (410) relative to the structure (110) using a coordinate system of the structure, and, optionally, wherein the mounting mechanism is magnetic-based, vacuum-based, electrostatic-based, gripper-based, or adhesive-based.

6. The NDI system of any preceding claim, wherein the UAV is operable to move using a predetermined flight path (135) that is updated using position and orientation data obtained from a tracking system or controlled using a remote control system.

7. The NDI system of any preceding claim, wherein the one or more NDI sensors (410) comprises at least one of: eddy current sensors, ultrasonic sensors, acoustic sensors, mechanical impedance sensors, optical sensors, x-ray backscatter sensors, computed tomography sensors, surface roughness sensors, IR thermography, microwave sensors, and terahertz sensors.

8. The NDI system of any preceding claim, wherein at least one of the one or more support structures (120; 220; 320) comprises a manipulator arm, wherein the manipulator arm comprises a gripper, and wherein the gripper is operable to manipulate the one or more NDI devices (125; 225; 325; 405) relative to the structure (110) to be inspected.

9. The NDI system of any preceding claim, wherein one of the one or more support structures (120; 220; 320) comprise one or more maintenance tools, wherein the one or more maintenance tools comprise a sander, a drill, a brush, a paint sprayer, a marker, an ink stamp, a laser, or a target applicator.

10. A computer program comprising computer program instructions that, when executed by a processor of a computerized system, cause the computerized system to perform a method for nondestructive inspection ("NDI") of a structure (110), the method comprising:
directing an unmanned aerial vehicle ("UAV") (105; 205; 305) to a target location of the structure (110);
physically securing one or more NDI devices (125; 225; 325; 405) of the UAV (105; 205; 305) to the target location; and
performing NDI of the target location using one or more NDI sensors (410) integrated to the one or more NDI devices (125; 225; 325; 405);
wherein the method further comprises detaching the one or more NDI devices (125; 225; 325; 405) from one or more support structures (120; 220; 320) of the UAV (105; 205; 305) when physically securing the one or more NDI devices (125; 225; 325; 405) onto the target location of the structure (110).

11. The computer program of claim 10, wherein the physically securing is magnetic-based, vacuum-based, electrostatic-based, adhesive-based, or gripper-based.

12. The computer program of any of claims 10 or 11 wherein the method further comprises tracking a position, an orientation, or both the position and the orientation relative to the target location using a location positioning system.

13. A non-transitory computer-readable storage medium having stored therein a computer program according to any of claims 10 to 12.

## Patentansprüche

1. Zerstörungsfreies Untersuchungssystem (nondestructive inspection system, NDI-System), wobei das NDI-System ein unbemanntes Luftfahrzeug (unmanned aerial vehicle, UAV) (105; 205; 305) und ein oder mehrere NDI-Vorrichtungen (125; 225; 325; 405) umfasst,
wobei das UAV (105; 205; 305) eine Körperstruktur (115; 215; 315) umfasst, wobei die Körperstruktur eine oder mehrere Trägerstrukturen (120; 220; 320) umfasst, die konfiguriert sind, um die eine oder die mehreren NDI-Vorrichtungen (125; 225; 325; 405) zu tragen, wobei die ein oder mehreren NDI-Vorrichtungen (125; 225; 325; 405) von der einen oder den mehreren Trägerstrukturen (120; 220; 320) lösbar sind;
wobei das NDI-System ferner einen oder mehrere NDI-Sensoren (410) umfasst, die in die eine oder die mehreren NDI-Vorrichtungen (125; 225; 325; 405) integriert sind;
wobei die eine oder die mehreren NDI-Vorrichtungen (125; 225; 325; 405) einen Befestigungsmechanismus umfassen, der betreibbar ist, um den einen oder die mehreren NDI-Sensoren (410) an einer zu untersuchenden Struktur (110) zu befestigen.

2. NDI-System nach Anspruch 1, wobei das UAV einen Freigabecontroller umfasst, der betreibbar ist, um ein Steuersignal an die ein oder mehreren Trägerstrukturen (120; 220; 320) zu liefern, um die ein oder mehreren NDI-Sensoren (410) von der einen oder den mehreren Trägerstrukturen (120; 220; 320) zu lösen.

3. NDI-System nach Anspruch 1 oder 2, bei dem mindestens einer der ein oder mehreren NDI-Sensoren (410) betreibbar ist, um unter Verwendung einer oder mehrerer NDI-Messmodalitäten zu messen, wobei die ein oder mehreren NDI- Messmodalitäten eine kontaktbasierte NDI-Messung umfassen.

4. NDI-System nach einem der vorhergehenden Ansprüche, mit einem Verbindungsseil, das betreibbar ist, um eine oder mehrere der folgenden Funktionen bereitzustellen: Leistung für mindestens einen der ein oder mehreren NDI-Sensoren (410), Steuersignale für mindestens einen der ein oder mehreren NDI-Sensoren, und einen Sicherheits- und Rückholmechanismus.

5. NDI-System nach einem der vorhergehenden Ansprüche, bei dem die ein oder mehreren NDI-Vorrichtungen (125; 225; 325; 405) konfiguriert sind, um sich während der Datenerfassung relativ zu der zu untersuchenden Struktur (110) zu bewegen, und das optional ferner ein Ortsverfolgungssystem umfasst, das betreibbar ist, um eine Position, eine Ausrichtung oder sowohl die Position als auch die Ausrichtung von mindestens einem der ein oder mehreren NDI-Sensoren (410) relativ zu der Struktur (110) unter Verwendung eines Koordinatensystems der Struktur zu bestimmen, und bei dem optional der Befestigungsmechanismus auf Magnetbasis, Vakuumbasis, elektrostatischer Basis, Greiferbasis oder Klebstoffbasis ist.

6. NDI-System nach einem der vorhergehenden Ansprüche, bei dem das UAV betreibbar ist, um sich unter Verwendung einer vorbestimmten Flugbahn (135) zu bewegen, die unter Verwendung von von einem Verfolgungssystem erhaltenen Positions- und Orientierungsdaten aktualisiert oder unter Verwendung eines Fernsteuerungssystems gesteuert wird.

7. NDI-System nach einem der vorhergehenden Ansprüche, bei dem die ein oder mehreren NDI-Sensoren (410) mindestens einen der folgenden Sensoren umfassen: Wirbelstromsensoren, Ultraschallsensoren, akustische Sensoren, mechanische Impedanzsensoren, optische Sensoren, Röntgenrückstreusensoren, Computertomographiesensoren, Oberflächenrauhigkeitssensoren, IR-Thermographie, Mikrowellensensoren und Terahertz-Sensoren.

8. NDI-System nach einem der vorhergehenden Ansprüche, bei dem mindestens eine der ein oder mehreren Trägerstrukturen (120; 220; 320) einen Manipulatorarm umfasst, wobei der Manipulatorarm einen Greifer umfasst, und wobei der Greifer betreibbar ist, um die ein oder mehreren NDI-Vorrichtungen (125; 225; 325; 405) relativ zu der zu untersuchenden Struktur (110) zu manipulieren.

9. NDI-System nach einem der vorhergehenden Ansprüche, bei dem eine der einen oder mehreren Trägerstrukturen (120; 220; 320) ein oder mehrere Wartungswerkzeuge umfassen, wobei das eine oder die mehreren Wartungswerkzeuge einen Schleifer, einen Bohrer, einen Pinsel, einen Farbsprüher, einen Marker, einen Tintenstempel, einen Laser oder einen Zielapplikator umfassen.

10. Computerprogramm mit Computerprogrammbefehlen, die, wenn sie von einem Prozessor eines Computersystems ausgeführt werden, das Computersystem veranlassen, ein Verfahren zur zerstörungsfreien Untersuchung (nondestructive inspection, NDI) einer Struktur (110) durchzuführen, wobei das Verfahren umfasst:
Lenken eines unbemannten Luftfahrzeugs (unmanned aerial vehicle, UAV) (105; 205; 305) auf einen Zielort der Struktur (110);
physisches Befestigen einer oder mehrerer NDI-Vorrichtungen (125; 225; 325; 405) des UAV (105; 205; 305) an dem Zielort; und
Durchführen von NDI des Zielortes unter Verwendung eines oder mehrerer NDI-Sensoren (410), die in die ein oder mehreren NDI-Vorrichtungen (125; 225; 325; 405) integriert sind;
wobei das Verfahren ferner das Lösen der ein oder mehreren NDI-Vorrichtungen (125; 225; 325; 405) von einer oder mehreren Trägerstrukturen (120; 220; 320) des UAV (105; 205; 305) umfasst, wenn die ein oder mehreren NDI-Vorrichtungen (125; 225; 325; 405) am Zielort der Struktur (110) physisch befestigt werden.

11. Computerprogramm nach Anspruch 10, wobei die physische Befestigung auf Magnetbasis, Vakuumbasis, elektrostatischer Basis, Klebstoffbasis oder Greiferbasis erfolgt.

12. Computerprogramm nach einem der Ansprüche 10 oder 11, wobei das Verfahren ferner das Verfolgen einer Position, einer Ausrichtung oder sowohl der Position als auch der Ausrichtung relativ zum Zielort unter Verwendung eines Ortspositionierungssystems umfasst.

13. Nichtflüchtiges computerlesbares Speichermedium, in dem ein Computerprogramm nach einem der Ansprüche 10 bis 12 gespeichert ist.

## Revendications

1. Système de contrôle non destructif (« NDI »), le système de NDI comprenant un véhicule aérien sans pilote (« UAV ») (105 ; 205 ; 305) et un ou plusieurs dispositifs de NDI (125 ; 225 ; 325 ; 405) ;
l'UAV (105 ; 205 ; 305) comprenant une structure de corps (115 ; 215 ; 315), la structure de corps comprenant une ou plusieurs structures de support (120 ; 220 ; 320) qui sont configurées pour supporter les un ou plusieurs dispositifs NDI (125 ; 225 ; 325 ; 405), les un ou plusieurs dispositifs NDI (125 ; 225 ; 325 ; 405) pouvant être libérés des une ou plusieurs structures de support (120 ; 220 ; 320) ;
le système de NDI comprenant un ou plusieurs capteurs de NDI (410) intégrés aux un ou plusieurs dispositifs de NDI (125 ; 225 ; 325 ; 405) ;
dans lequel les un ou plusieurs dispositifs de NDI (125 ; 225 ; 325 ; 405) comprennent un mécanisme de montage qui est opérationnel pour fixer les un ou plusieurs capteurs de NDI (410) à une structure (110) devant être contrôlée.

2. Système de NDI selon la revendication 1, dans lequel l'UAV comprend un dispositif de commande de libération pouvant fonctionner pour fournir un signal de commande aux une ou plusieurs structures de support (120 ; 220 ; 320) afin de libérer les un ou plusieurs capteurs de NDI (410) à partir des une ou plusieurs structures de support (120 ; 220 ; 320).

3. Système de NDI selon la revendication 1 ou 2, dans lequel au moins un des un ou plusieurs capteurs NDI (410) peut fonctionner pour détecter une ou plusieurs modalités de détection de NDI, dans lequel les une ou plusieurs modalités de détection de NDI comprennent une détection de NDI à base de contact.

4. Système de NDI selon l'une quelconque des revendications précédentes, comprenant un câble pouvant fonctionner pour fournir un ou plusieurs parmi : de la puissance à au moins un des un ou plusieurs capteurs de NDI (410), des signaux de commande à au moins un des un ou plusieurs capteurs de NDI, et un mécanisme de sécurité et de récupération.

5. Système de NDI selon l'une quelconque des revendications précédentes, dans lequel les un ou plusieurs dispositifs de NDI (125 ; 225 ; 325 ; 405) sont configurés pour se déplacer par rapport à la structure (110) à inspecter pendant une collecte des données et, facultativement, comprenant en outre un système de suivi d'emplacement pouvant fonctionner pour déterminer une position, une orientation, ou à la fois la position et l'orientation, d'au moins un des un ou plusieurs capteurs de NDI (410) par rapport à la structure (110) en utilisant un système de coordonnées de la structure, et facultativement dans lequel le mécanisme de montage est à base magnétique, à base de vide, à base électrostatique, à base de dispositif de préhension, ou à base d'adhésif.

6. Système de NDI selon l'une quelconque des revendications précédentes, dans lequel l'UAV peut être actionné pour se déplacer en utilisant une trajectoire de vol prédéterminée (135) qui est mise à jour en utilisant des données de position et d'orientation obtenues à partir d'un système de suivi ou commandée en utilisant un système de commande à distance.

7. Système de NDI selon l'une quelconque des revendications précédentes, dans lequel les un ou plusieurs capteurs NDI (410) comprennent au moins un parmi : des capteurs à courants de Foucault, des capteurs à ultrasons, des capteurs acoustiques, des capteurs d'impédance mécanique, des capteurs optiques, des capteurs à rétrodiffusion de rayons X, des capteurs de tomodensitométrie, des capteurs de rugosité de surface, une thermographie infrarouge, les capteurs hyperfréquences, et des capteurs térahertz.

8. Système de NDI selon l'une quelconque des revendications précédentes, dans lequel au moins l'une des une ou plusieurs structures de support (120 ; 220 ; 320) comprend un bras manipulateur, dans lequel le bras manipulateur comprend un dispositif de préhension, et dans lequel le dispositif de préhension peut fonctionner pour manipuler les un ou plusieurs capteurs de NDI (410) par rapport à une structure (110) en cours de contrôle.

9. Système de NDI selon l'une quelconque des revendications précédentes, dans lequel l'une des une ou plusieurs structures de support (120 ; 220 ; 320) comporte un ou plusieurs outils d'entretien, dans lequel les un ou plusieurs outils d'entretien comprennent une ponceuse, une perceuse, une brosse, un pulvérisateur de peinture, un marqueur, un tampon encreur, un laser, ou un applicateur de cible.

10. Programme informatique comprenant des instructions de programme informatique qui, lorsqu'elles sont exécutées par un processeur d'un système informatique, amènent le système informatique à exécuter un procédé de contrôle non destructif (« NDI ») d'une structure (110), le procédé comprenant les étapes consistant à :
diriger un véhicule aérien sans pilote (« UAV ») (105 ; 205 ; 305) vers un emplacement cible de la structure (110) ;
fixer physiquement un ou plusieurs dispositifs de NDI (125 ; 225 ; 325 ; 405) de l'UAV (105 ; 205 ; 305) à l'emplacement cible ; et
effectuer un NDI de l'emplacement cible en utilisant un ou plusieurs capteurs de NDI (410) intégrés aux un ou plusieurs dispositifs de NDI (125 ; 225 ; 325 ; 405) ;
dans lequel le procédé comprend en outre l'étape consistant à détacher les un ou plusieurs dispositifs de NDI (125 ; 225 ; 325 ; 405) à partir d'une ou plusieurs structures de support (120 ; 220 ; 320) de l'UAV (105 ; 205 ; 305) lors de la fixation physique des un ou plusieurs dispositifs de NDI (125 ; 225 ; 325 ; 405) sur l'emplacement cible de la structure (110).

11. Programme informatique selon la revendication 10, dans lequel la fixation physique est à base magnétique, à base de vide, à base électrostatique, à base d'adhésif, ou à base de dispositif de préhension.

12. Programme informatique selon l'une quelconque des revendications 10 ou 11, dans lequel le procédé comprend en outre le suivi d'une position, d'une orientation, ou à la fois de la position et de l'orientation par rapport à l'emplacement cible en utilisant un système de positionnement d'emplacement.

13. Support de stockage lisible par ordinateur non transitoire ayant, stocké dans celui-ci, un programme informatique selon l'une quelconque des revendications 10 à 12.
